# EUROPEAN PATENT SPECIFICATION

(11) **EP 4 477 920 B1**
(45) Date of publication and mention of the grant of the patent: **03.06.2026**
(21) Application number: 23179029.6
(22) Date of filing: 13.06.2023
(51) Int. Cl.: F16H 37/08, B60B 35/12, B60K 1/00, F16H 48/20

(54) **GEARBOX ASSEMBLY AND POWER TRAIN ASSEMBLY FOR A VEHICLE AXLE, AND RELATED VEHICLE**
GETRIEBEANORDNUNG UND ANTRIEBSSTRANGANORDNUNG FÜR EINE FAHRZEUGACHSE UND ZUGEHÖRIGES FAHRZEUG
ENSEMBLE BOÎTE DE VITESSES ET ENSEMBLE GROUPE MOTOPROPULSEUR POUR ESSIEU DE VÉHICULE, ET VÉHICULE ASSOCIÉ

(43) Date of publication of application: 18.12.2024
(73) Proprietor: Volvo Truck Corporation, 405 08 Göteborg (SE)
(72) Inventor: Lieberum, Nicholas, York Springs, PA, 17372 (US)
(74) Representative: Lavoix

(56) References cited:
- EP-A1- 3 798 466
- EP-A1- 4 190 609
- CN-A- 106 382 349
- CN-U- 205 260 777
- DE-A1- 102009 030 978
- DE-A1- 102013 204 227
- DE-A1- 102019 214 512
- US-A- 2 152 771
- US-A1- 2022 045 574

## Description

### TECHNICAL FIELD

The present invention relates to the field of vehicles. In particular aspects, the present invention relates to a gearbox assembly and to a powertrain assembly for a vehicle axle, and to a related vehicle.

The present invention is particularly suitable for electrically driven vehicle axles or E-axles, and can be applied to heavy-duty or medium-duty vehicles, e.g. trucks, and will be described herein by making more specific reference to such applications, without intending in any way to restrict its possible applications.

### BACKGROUND

As known, E-axles are used to drive the wheels of a vehicle, such as of trucks used for example for heavy-duty or medium-duty applications.

Modern E-axles can be functionally quite effective. However, they are challenging to package within the available space of the vehicle to allow routing of many components needed to support the truck propulsion, such as for instance high voltage cables, brake lines, pneumatics, cooling hoses, harnesses, etc., and actually there is need, desire and room for further improvements in the way they are realized.

DE102009030978 A1 discloses a rotation direction reversal mechanism that can be used in conjunction with a crank CVT transmission in order to change the direction of travel in a vehicle. An input shaft of the rotation direction reversing mechanism is associated to a differential which transmits the torque introduced into its basket over the wheels of the vehicle. In order to transmit the torque from the input shaft to the differential for the forward driving function, the input shaft is connected directly to the differential carrier via a switching device having a switching sleeve. To this end, the shift sleeve is moved so that it simultaneously engages the input shaft and an engagement device on the differential carrier. If the differential has to be rotated in the opposite direction for a reverse driving function, the shift sleeve is moved in the opposite direction so that it is simultaneously connected to the input shaft and to a rotation direction reversing device.

US 2,152,771 A discloses a two-speed rear axle for automotive vehicles, which comprises a differential carrier, a driving gear member, formed of a gear section, which engages with a pinion, and a gear section. A shiftable and slidably movable clutch member comprises clutch teeth which engage with teeth provided on the differential case so that the driving gear member and the differential case can rotate jointly and axle shafts are driven in direct drive mode. A large gear having teeth is formed in the differential case. A gear member is mounted for shiftable but non-rotatable movement over a spline shaft and comprises gear sections having respective first and second teeth. The first teeth are suitable to engage the gear section, while the second teeth are suitable to engage with the teeth.

### SUMMARY

According to the invention, there is provided a gearbox assembly for a vehicle axle which extends along a rotation axis, the assembly comprising at least:
a planetary gear system which is positioned along the vehicle axle and is suitable to receive power from a motor associated to the vehicle axle, the planetary gear system comprising a ring gear, a sun gear, a planet comprising one or more planet gears, and a planet carrier which comprises an output member;
a differential comprising a differential shaft which is positioned along the rotation axis with a first end adjacent to the planet carrier and comprises an output gear positioned concentrically to the rotation axis along the differential shaft;
a free wheeling gear located concentrically to the output member of the planet carrier;
a plurality of countershaft assemblies each comprising:
   - a countershaft positioned rotating about an axis parallel to the rotation axis;
   - two countershaft gears which are mounted on the corresponding countershaft spaced apart from each other and are configured to engage one with the free wheeling gear and the other with the output gear, respectively;
a clutch which is configured to be operated at least between a first position where it couples the output member of the planet carrier with the free wheeling gear and a second position where it couples the output member of the planet carrier directly with the differential. The invention may seek to improve packaging and installation of the gearbox assembly per se. A technical benefit may include obtaining a robust and compact design package of a gearbox assembly that can be used, as a separate module, in connection with an associate motor, in particular an electrical motor properly sized, thus allowing modularity of use for instance in both heavy-duty and medium duty vehicles.

In some examples, including in at least one preferred example, optionally the plurality of countershaft assemblies comprises:
a first countershaft assembly comprising a first countershaft which is positioned rotating about a first axis parallel to the rotation axis, a first countershaft gear and a second countershaft gear which are mounted on the first countershaft spaced apart from each other and are configured to engage with the free wheeling gear and the output gear, respectively;
a second countershaft assembly comprising a second countershaft which is positioned, on a side of the vehicle axis opposite to the one side where the first countershaft is positioned, rotating about a second axis parallel to the rotation axis, a third countershaft gear and a fourth countershaft gear which are mounted on the second countershaft spaced apart from each other and are configured to engage with the free wheeling gear and the output gear, respectively.

In some examples, including in at least one preferred example, optionally said first and second countershafts are positioned around the rotation axis along a virtual circumference having, as its center, the rotation axis, with their respective first and second rotation axes that are located diametrically opposite to each other with respect to the rotation axis itself.

In some examples, including in at least one preferred example, optionally the plurality of countershaft assemblies comprises:
- a first countershaft assembly comprising a first countershaft which is positioned rotating about a first axis parallel to the rotation axis, a first countershaft gear and a second countershaft gear which are mounted on the first countershaft spaced apart from each other and are configured to engage with the free wheeling gear and the output gear, respectively;
- a second countershaft assembly comprising a second countershaft which is positioned rotating about a second axis parallel to the rotation axis, a third countershaft gear and a fourth countershaft gear which are mounted on the second countershaft spaced apart from each other and are configured to engage with the free wheeling gear and the output gear, respectively;
- a third countershaft assembly comprising a third countershaft which is positioned rotating about a third axis parallel to the rotation axis, a fifth countershaft gear and a sixth countershaft gear which are mounted on the third countershaft spaced apart from each other and are configured to engage with the free wheeling gear and the output gear, respectively.

In some examples, including in at least one preferred example, optionally said first, second and third countershafts are positioned around the rotation axis with their respective rotation axes positioned at the vertices of a substantially equilateral triangle.

In some examples, including in at least one preferred example, optionally the clutch is positioned between the planet carrier and the differential and is configured to be operated to shift, along the rotation axis, between said first and second positions.

In some examples, including in at least one preferred example, optionally the clutch comprises or is constituted by a dog clutch.

In some examples, including in at least one preferred example, optionally the free wheeling gear comprises one or more teeth configured to engage with the clutch in said first position and to be disengaged from the clutch in said second position.

In some examples, including in at least one preferred example, optionally the gearbox assembly further comprises a coupling gear which is mounted along the vehicle axle concentrically to the rotation axis and is adapted to be operatively connected to said motor.

In some examples, including in at least one preferred example, optionally the coupling gear is mechanically connected to the sun gear via a coupling member.

Further according to the invention, there is provided a powertrain assembly for rotating a vehicle axle around a rotation axis, the powertrain assembly comprising
a gearbox assembly as above defined, and in particular as defined in the appended claims; and
a motor operatively coupled to the gearbox assembly. The invention may seek to improve packaging. A technical benefit may include obtaining a robust and compact design package of a complete powertrain assembly that can be used as a whole module for use in both heavy-duty and medium duty applications.

In some examples, including in at least one preferred example, optionally the motor is an electric motor having a stator and a rotor, wherein the motor is mounted with its rotor rotating about an axis substantially parallel to the rotation axis of the vehicle axle.

In some examples, including in at least one preferred example, optionally the powertrain assembly further comprises a gear set configured for mechanically coupling an output shaft of the motor with the gearbox assembly.

In some examples, including in at least one preferred example, the gear set comprises a first gear suitable to be mounted on the output shaft of the motor and a second gear suitable to be positioned between and to engage with both said first gear and said coupling gear of the gearbox assembly.

In some examples, including in at least one preferred example, the gear set comprises only a first gear suitable to be mounted on the output shaft of the motor and to engage with said coupling gear of the gearbox assembly.

In some examples, including in at least one preferred example, said motor is an electric motor having a stator and a rotor, wherein the motor is mounted along the vehicle axle with its rotor rotating positioned concentrically to the rotation axis.

In some examples, including in at least one preferred example, the rotor of said motor is coupled directly with the sun gear.

Still further according to the invention, there is provided a vehicle comprising at least a gearbox assembly or a powertrain assembly as above defined, and in particular as hereinafter described and claimed in the accompanying claims.

In some examples, including in at least one preferred example, optionally the vehicle is a heavy-duty or medium-duty vehicle.

In some examples, including in at least one preferred example, optionally the vehicle is a heavy-duty or medium-duty truck.

Thanks to one or more of the above aspects, a technical benefit may include the possibility of obtaining a flexible and scalable configuration, according to a design that can be properly selected depending on the specific applications, and that in any case is extremely robust, compact and allows for maximum modularity of applications, such as for heavy duty/medium duty applications.

Another technical benefit may include obtaining a very simple bearing layouts, eliminating or at least reducing the need for bearings supporting the planet carrier, thus leading to simplification and improved float/load share.

Another technical benefit may include obtaining a simplification of the differential bearings due to the radial force elimination that occurs with a multi-countershaft design. This leads to use of simple bearings not requiring shimming or adjustment.

Another technical benefit may include the possibility of obtaining multiple speed ratios in an effective and efficient way.

Another technical benefit may include using simple and already clutch system, with full floating of critical components for example of the planetary system.

Another technical benefit may include the possibility of obtaining an improved ground clearance and lightweight.

### BRIEF DESCRIPTION OF THE DRAWINGS

Examples are described in more detail below with reference to the appended drawings.
FIG. 1 is an exemplary perspective view of a gearbox assembly for a vehicle axle, according to an example, shown coupled to an electric motor.
FIG. 2 is an exemplary perspective view of a gearbox assembly for a vehicle axle, according to another example, shown coupled to an electric motor and seen from a rear view.
FIG. 3 is a schematic plan view of the components illustrated in FIG. 2.
FIG. 4, 5 and 6 are side cross-sections schematically illustrating the gearbox assembly for a vehicle axle of FIG. 1 or of FIG 2, in three different positions;
FIG. 7 is an exploded perspective view schematically illustrating components of a vehicle axle including a powertrain assembly, according to an example;
FIG. 8. is a perspective view of a portion of a vehicle axle with a powertrain assembly assembled, according to a possible example.

### DETAILED DESCRIPTION

The detailed description set forth below provides information and examples of the disclosed technology with sufficient detail to enable those skilled in the art to practice the invention.

In general, vehicle axles, and in particular electric or E-axle of vehicles, may be somehow difficult and cumbersome to be installed and their structure and configuration may not be flexible enough to be applied to different vehicles.

To this regard, and as it will become more evident hereinafter, the present invention provides a gearbox assembly for a vehicle axle, as well as a powertrain assembly comprising such gearbox assembly, comprising: a planetary gear system suitable to receive power from a motor, in particular an electric motor, associated to and configured for driving the wheels attached at the ends of the vehicle axle, a differential positioned adjacent to the planet carrier of the planetary gear system; a free wheeling gear located concentrically to an output shaft of the planet carrier; a plurality of countershaft assemblies configured for coupling with the free wheeling gear and an output gear of the differential; and a clutch which is configured to be shifted between a first position where it couples the planet carrier with the free wheeling gear, and a second position where it couples the planet carrier with the differential.

The gearbox assembly and the powertrain assembly according to the invention may thus result in obtaining a multi-speed output of the differential, may have a robust and compact structure, and may also have a simplified and modular configuration that may be applied to different vehicles.

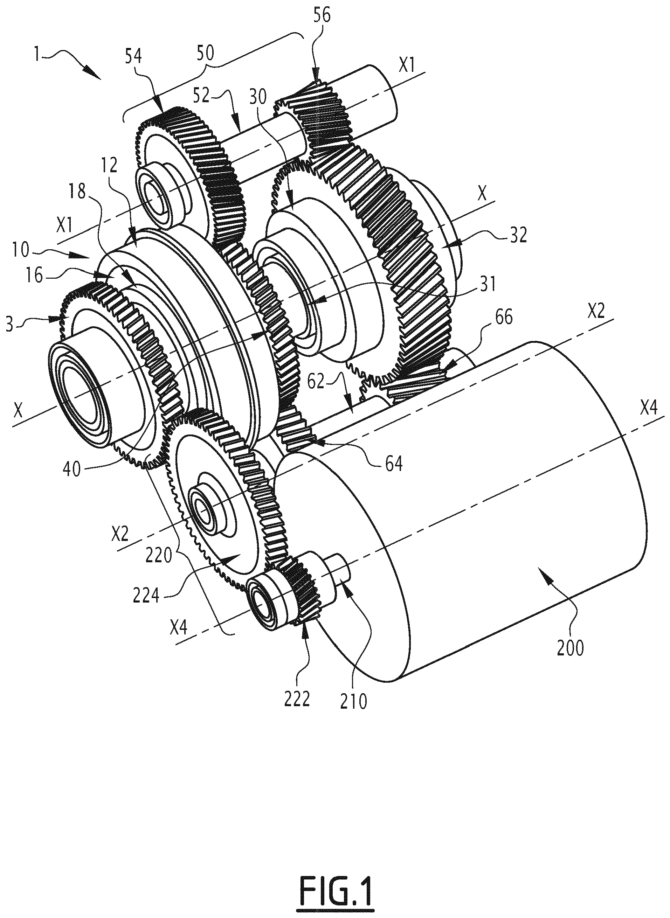

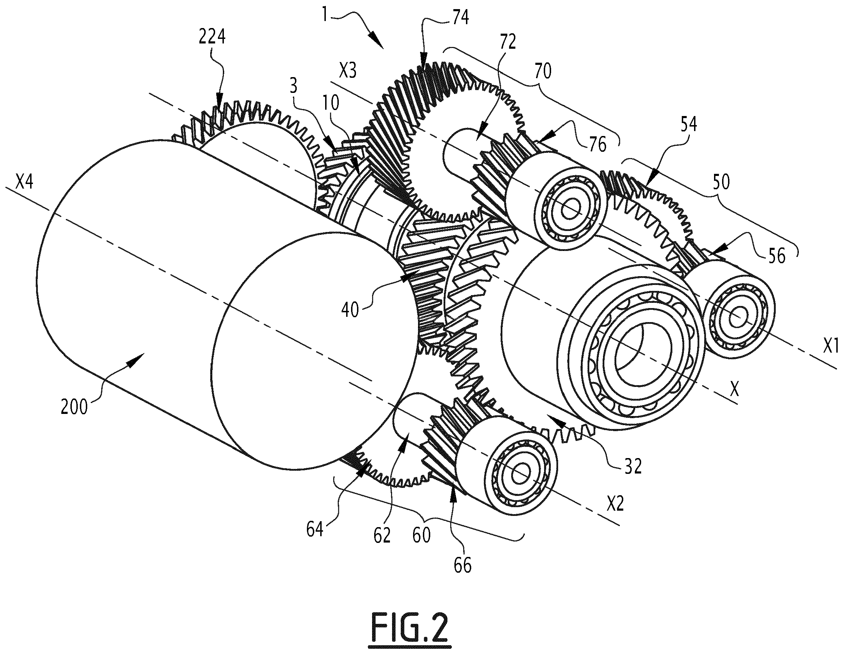

FIG. 1 and FIG. 2 illustrate two examples of a gearbox assembly according to the invention, indicated by the overall reference number 1.

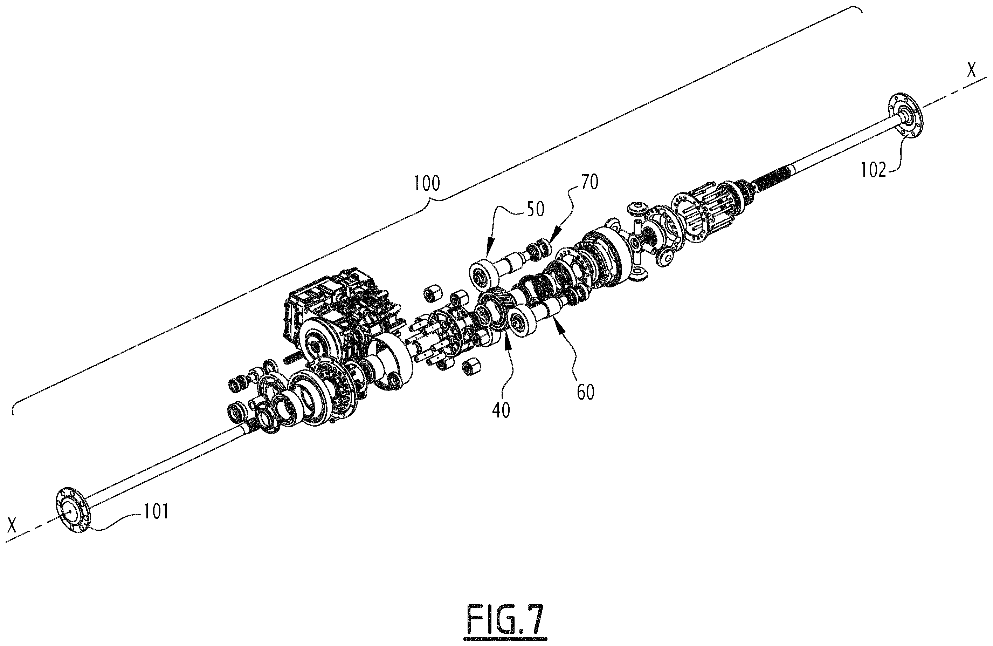

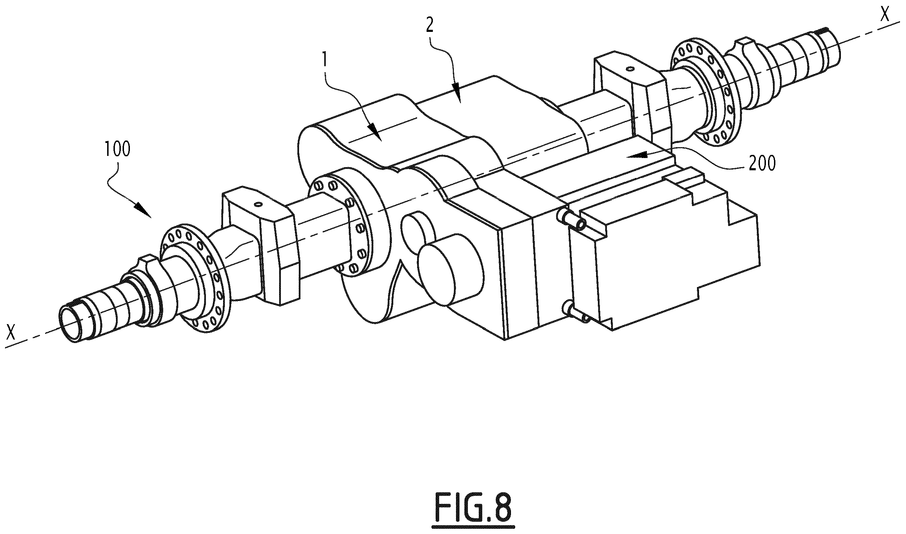

The gearbox assembly 1 is suitable to be installed along a vehicle axle, in particular an E-axle, an example of which is shown in FIG. 7 and (partly) in Fig. 8, and therein indicated by the overall reference 100.

The vehicle axle 100 extends along a longitudinal axis, indicated in the figures by the capital letter X, around which the wheels (not illustrated) attached to the opposite ends 101 and 102 (see figure 7) of the axle 100, can be rotated.

The gearbox assembly 1 is shown in the figures coupled to a motor 200 which is suitable to provide the gearbox assembly 1 with the power/torque needed for rotating the wheels.

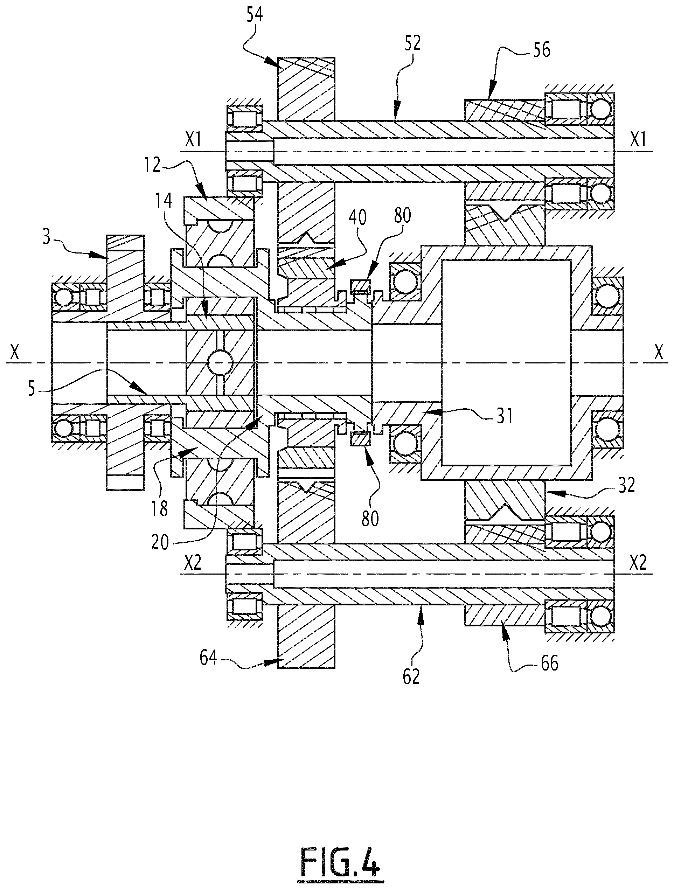

In particular, the gearbox assembly 1 comprises at least:
- a planetary gear system, indicated in FIG. 1 and FIG.2 by the overall reference number 10, which is for example installed along the vehicle axle 100;
- a differential 30;
- a free wheeling gear 40;
- a plurality of countershaft assemblies 50, 60, 70; and
- a clutch, schematically represented in FIG. 4 to 6 by the reference number 80.

The planetary gear system 10 comprises for example a ring gear 12 which is suitable to be connected to a housing, e.g. a housing of the assembly illustrated in FIG. 8 and there indicated by the reference number 2, a sun gear 14, a planet 16 comprising one or more planet gears, a planet carrier 18 which comprises an output member, indicated in FIG. 4 to 6 by the reference number 20, for example a shaft, and can be driven for example by the sun gear 14.

The differential 30 is positioned along the rotation axis X and comprises a shaft member 31 which is positioned along the axle 100, rotating around the rotation axis X, and has a first end which is adjacent to and faces the output member 20 of the planet carrier 18, and an output gear 32 which is positioned, on the shaft member 31, concentrically to the rotation axis X, for instance at a second end of the shaft member 31 opposite to said first end.

In one possible example, the free wheeling gear 40 is located around and concentrically to the output member 20 of the planet carrier 18.

Each of the plurality of countershafts assemblies comprises a respective countershaft which is positioned rotating about an axis substantially parallel to the rotation axis X, and two respective countershaft gears which are mounted on the corresponding countershaft, spaced apart from each other, and are configured to engage one with the free wheeling gear 40 and the other with the output gear 32 of the differential 30, respectively.

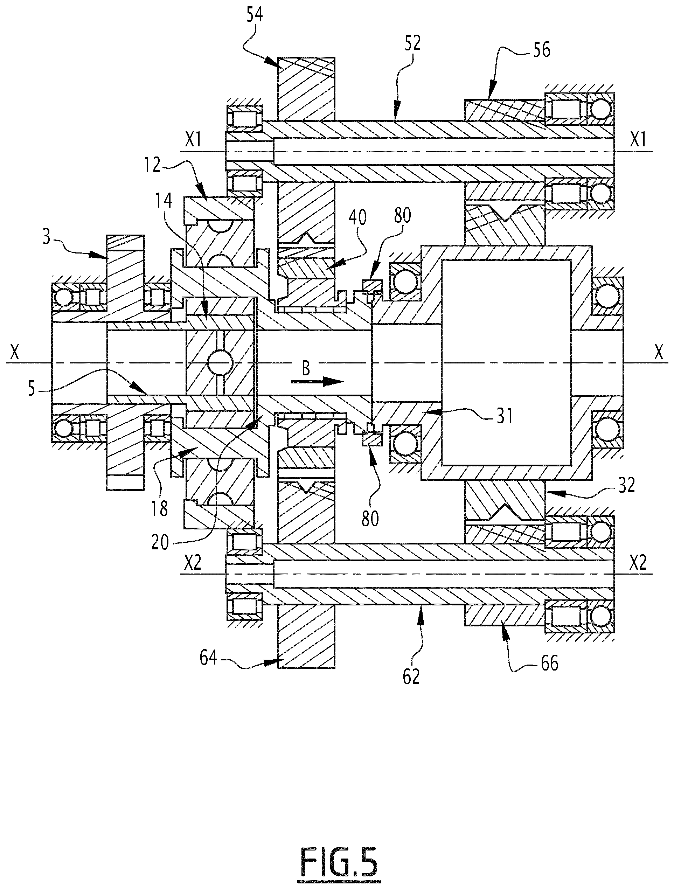

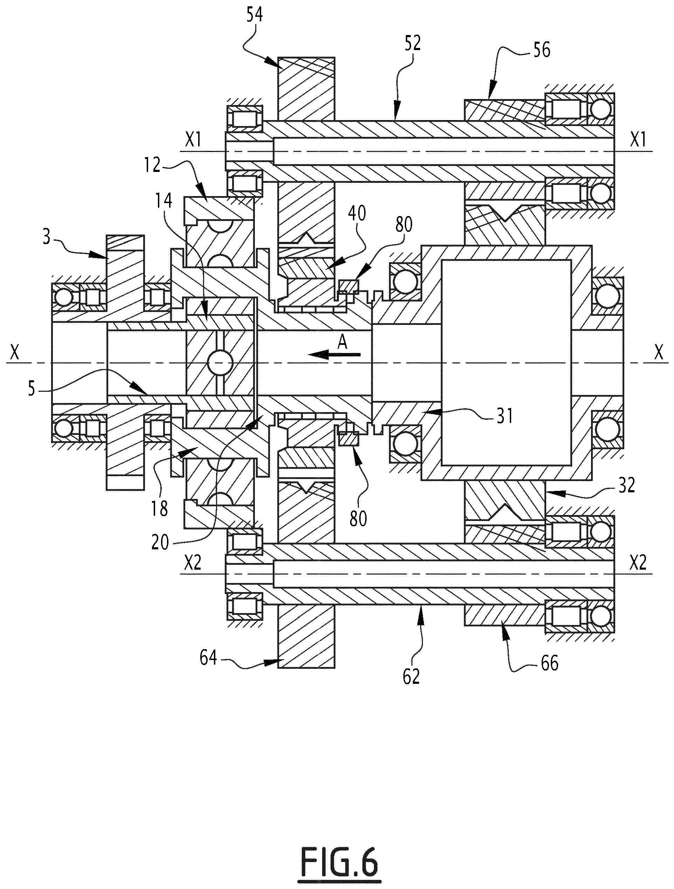

The clutch 80 is shown in FIG. 4 in a neutral position and is configured to be operated between a first position, schematically illustrated in figure 6, where it couples the planet carrier 18, and in particular its output member 20, with the free wheeling gear 40, and a second position, schematically illustrated in figure 5, where it couples the planet carrier 18, and in particular its output member 20, directly with the differential 30, and in particular with the shaft member 31.

In one possible example, the clutch 80 is positioned, along the axis X, between the planet carrier 18, and in particular its output member 20, and the differential 30, in particular the first end portion of the shaft member 31, and is configured to be operated to shift, along the rotation axis X, between said first and second positions.

In this way, when the clutch 80 is operated, for instance shifting in a first direction (see arrow A in FIG.6) along the axis X, it connects the planet carrier 18 to the free wheeling gear 40, and thus a low reduction is created that transfers power from the motor 200 to the differential output gear through the multiple countershaft assemblies.

When the clutch 80 is shifted along the axis 100 in the other direction (see arrow B in FIG. 5), a high gear is created since the planet carrier 18 is coupled directly to the differential 30.

Thus, different speeds, to be transmitted to the wheels, can be usefully obtained at the output of the differential 30.

In one possible example, the clutch 80 comprises or is constituted by a dog clutch.

In one possible example, the free wheeling gear 40 comprises one or more teeth configured to engage with the clutch 80 in said first position and to be disengaged from the clutch 80 in said second position.

In one possible example, as illustrated in FIG. 1, the plurality of countershaft assemblies comprises:
- a first countershaft assembly, indicated by the overall reference number 50, which comprises a first countershaft 52 which is positioned rotating about a first axis X1 parallel to the rotation axis X, a first countershaft gear 54 and a second countershaft gear 56 which are mounted on the first countershaft 52 spaced apart from each other and are configured to engage with the free wheeling gear 40 and the output gear 32 of the differential 30, respectively;
- a second countershaft assembly, indicated by the overall reference number 60, which comprises a second countershaft 62 which is positioned, rotating about a second axis X2 parallel to the rotation axis X and to the first axis X1, a third countershaft gear 64 and a fourth countershaft gear 66 which are mounted on the second countershaft 62 spaced apart from each other and are configured to engage with the free wheeling gear 40 and the output gear 32 of the differential 30, respectively.

In particular, according to one aspect, the first countershaft 52 is positioned on one side of the rotation axis 100 rotating about the first axis X1 parallel to the rotation axis X, and the second countershaft 62 is positioned, with respect to the rotation axis X, on a side of the opposite to the one side where the first countershaft 52 is positioned, and rotates about the second axis X2.

In practice, the first countershaft 52 and the second countershaft 62 are positioned (seen in a transversal view perpendicular to the rotation axis X) along a virtual circumference having, as its center, the rotation axis X, and where the respective axes X2 and X3 are located diametrically opposite to each other with respect to the rotation axis X, i.e. they are located at the ends of a diameter of such virtual circumference.

In another possible example, as illustrated in FIG. 2, in addition to the first and second countershaft assemblies 50 and 60 above mentioned, the plurality of countershaft assemblies comprises a third countershaft assembly, indicated by the overall reference number 70, which comprises: a third countershaft 72 that is positioned rotating about a third axis X3 parallel to the rotation axis X; a fifth countershaft gear 74 and a sixth countershaft gear 76 which are mounted on the third countershaft 72, spaced apart from each other, and are configured to engage with the free wheeling gear 40 and the output gear 32, respectively.

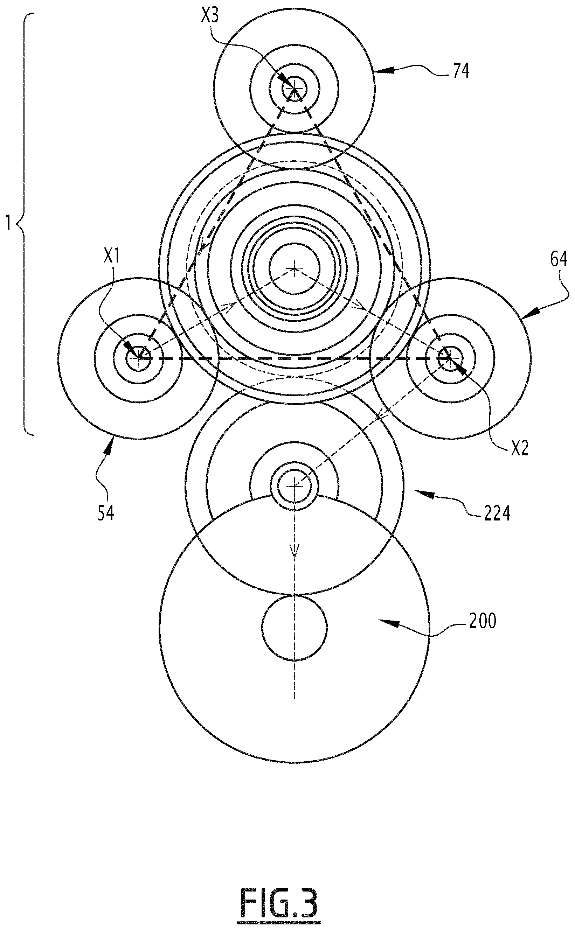

According to this example, in one possible aspect the first, second and third countershafts 52, 62, 72 are positioned around the vehicle axle 100 with their respective rotation axes X1, X2, X3 which are positioned, seen in a transversal plan substantially perpendicular to the rotation axis X, at the vertices of a substantially equilateral triangle, represented in figure 3 with dotted lines.

In one possible example, the gearbox assembly 1 further comprises a coupling gear, indicated in the figures by the reference number 3, which is mounted along the vehicle axle 100 concentrically to the rotation axis X, and is adapted to be operatively coupled to a motor, such as the motor 200, providing motion/torque to the gearbox assembly 1.

In one possible example, the coupling gear 3 is connected mechanically to the sun gear 14 via a coupling member 5, such as a spline or any suitable mechanical coupling member.

In practice, the whole gearbox assembly 1 forms a kind of compact module which can be coupled to any desired motor 200 according to the specific applications and needs, thereby forming a powertrain assembly for the vehicle axle 100, as for example illustrated in FIG. 8.

To this end, the motor 200, to be associated to the gearbox assembly 1, can be mounted inside a housing, which can be the same housing 2 accommodating the gearbox assembly 1 and suitably shaped to house also the motor 200, or inside an additional housing coupled to the housing 2.

As those skilled in the art would easily appreciate, any housing used for accommodating the components of the gearbox assembly 1 alone, or the whole power train assembly can be realized in any suitable number of pieces.

In a possible example, the motor 200 is an electric motor having a stator and a rotor, according to solutions well known or readily available to those skilled in the art and therefore herein not described in details.

In particular, in a possible example, as illustrated for instance in the attached figures, the motor 200 is mounted with its rotor rotating about an axis X4 substantially parallel to the longitudinal axis X of the vehicle axle 100.

In one possible example, illustrated in FIG. 1 and 2, the powertrain assembly further comprises a gear set 220 configured for mechanically coupling an output shaft 210 of the motor 200 itself with the gearbox assembly 1, and in particular with the coupling gear 3.

In one possible example, the gear set 220 comprises a first gear 222 suitable to be mounted on the output shaft 210 of the motor 200 and a second gear 224 suitable to be positioned between and to engage with both the first gear 222 and the coupling gear 3 of the gearbox assembly 1.

In this way, a first reduction, which can be suitably pre-selected, can be obtained.

In a possible example (not illustrated in the figures), the second gear 224 can be eliminated the first gear 222 and the coupling gear 3 engaging directly with each other.

In another possible example (also not illustrated in the figures) the motor 200 is an electric motor having a stator and a rotor, wherein the motor 200 is mounted along the vehicle axle 100 with its rotor rotating positioned concentrically to the rotation axis X.

In practice it has been that, according to the various examples disclosed, the present invention provides a gearbox assembly 1, a powertrain assembly, and a vehicle allowing for optimized packaging, and a simplified, robust, reliable and modular structure.

In particular, the invention allows full floating of critical components of the planetary and central gears of the multi-countershaft section of the gearbox.

The arrangement also allows for very simple bearing layouts, eliminating the need for bearings supporting the planet carrier, thus leading to simplification and improved float/load share.

In addition to the elimination of the planet carrier support bearings, a simplification of the differential bearings occurs due to the radial force elimination that occurs with a multi-countershaft design. This leads to potentially use simple bearings not requiring shimming or adjustment.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

In particular, when the term "adapted" or "arranged" or "configured" or "shaped", or "set" or any equivalent or similar term is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

In addition, when the term "substantial" or "substantially" is used herein, it has to be understood as encompassing an actual variation of plus or minus 5% with respect to an indicated reference value, or axis, or position, and when the terms transversal or transversally are hereby used, they have to be understood as encompassing a direction non-parallel to the reference part(s) or direction(s)/axis they refer to, and perpendicularity has to be considered a specific case of transverse direction.

Further, in the foregoing description and claims, the numeral ordinals first, second, et cetera..., have been used only for the sake of clarity of description and in no way they should be understood as limiting for whatsoever reason, nor that the order should be necessarily the one described in the illustrated exemplary example(s).

Finally, it is to be understood that the present invention is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the invention being set forth in the following claims.

## Claims

1. A gearbox assembly (1) for a vehicle axle (100) which extends along a rotation axis (X), the assembly (1) comprising at least:
- a planetary gear system (10) which is positioned along the vehicle axle (100) and is suitable to receive power from a motor (200) associated to the vehicle axle (100), the planetary gear system (10) comprising a ring gear (12), a sun gear (14), a planet comprising one or more planet gears (16), and a planet carrier (18) which comprises an output member (20);
- a differential (30) comprising a differential shaft (31) which is positioned along the rotation axis (100) with a first end adjacent to the planet carrier (18) and comprises an output gear (32) positioned concentrically to the rotation axis (X) along the differential shaft (31);
- a free wheeling gear (40) located concentrically to the output member (20) of the planet carrier (18);
- a plurality of countershaft assemblies (50, 60, 70) each comprising:
- a countershaft (52, 62, 72) positioned rotating about an axis (X1, X2, X3) parallel to the rotation axis (X);
- two countershaft gears (54, 64, 74; 56, 66, 76) which are mounted on the corresponding countershaft (52, 62, 72) spaced apart from each other and are configured to engage one (54, 64, 74) with the free wheeling gear (40) and the other (56, 66, 76) with the output gear (32), respectively;
- a clutch (80) which is configured to be operated at least between a first position where it couples the output member (20) of the planet carrier (18) with the free wheeling gear (40) and a second position where it couples the output member (20) of the planet carrier (18) directly with the differential (30).

2. The gearbox assembly (1) according to claim 1, wherein the plurality of countershaft assemblies comprises:
- a first countershaft assembly (50) comprising a first countershaft (52) which is positioned rotating about a first axis (X1) parallel to the rotation axis (X), a first countershaft gear (54) and a second countershaft gear (56) which are mounted on the first countershaft (52) spaced apart from each other and are configured to engage with the free wheeling gear (40) and the output gear (32), respectively;
- a second countershaft assembly (60) comprising a second countershaft (62) which is positioned, on a side of the vehicle axis (100) opposite to the one side where the first countershaft (52) is positioned, rotating about a second axis (X2) parallel to the rotation axis (X), a third countershaft gear (64) and a fourth countershaft gear (66) which are mounted on the second countershaft (62) spaced apart from each other and are configured to engage with the free wheeling gear (40) and the output gear (32), respectively.

3. The gearbox assembly (1) according to claim 2, wherein said first and second countershafts (52, 62) are positioned around the rotation axis (X) along a virtual circumference having, as its center, the rotation axis (X), with their respective first and second rotation axes (X2, X3) that are located diametrically opposite to each other with respect to the rotation axis (X) itself.

4. The gearbox assembly (1) according to claim 1, wherein the plurality of countershaft assemblies comprises:
- a first countershaft assembly (50) comprising a first countershaft (52) which is positioned rotating about a first axis (X1) parallel to the rotation axis (X), a first countershaft gear (54) and a second countershaft gear (56) which are mounted on the first countershaft (52) spaced apart from each other and are configured to engage with the free wheeling gear (40) and the output gear (32), respectively;
- a second countershaft assembly (60) comprising a second countershaft (62) which is positioned rotating about a second axis (X2) parallel to the rotation axis (X), a third countershaft gear (64) and a fourth countershaft gear (66) which are mounted on the second countershaft (62) spaced apart from each other and are configured to engage with the free wheeling gear (40) and the output gear (32), respectively;
- a third countershaft assembly (70) comprising a third countershaft (72) which is positioned rotating about a third axis (X3) parallel to the rotation axis (X), a fifth countershaft gear (74) and a sixth countershaft gear (76) which are mounted on the third countershaft (72) spaced apart from each other and are configured to engage with the free wheeling gear (40) and the output gear (32), respectively.

5. The gearbox assembly (1) according to claim 4, wherein said first, second and third countershafts (52, 62, 72) are positioned around the rotation axis (X) with their respective rotation axes (X1, X2, X3) positioned at the vertices of a substantially equilateral triangle.

6. The gearbox assembly (1) according to one or more of the previous claims, wherein the clutch (80) is positioned between the planet carrier (18) and the differential (30) and is configured to be operated to shift, along the rotation axis (X), between said first and second positions.

7. The gearbox assembly (1) according to one or more of the previous claims, wherein the clutch (80) comprises or is constituted by a dog clutch.

8. The gearbox assembly (1) according to one or more of the previous claims, wherein the free wheeling gear (40) comprises one or more teeth configured to engage with the clutch (80) in said first position and to be disengaged from the clutch (80) in said second position.

9. The gearbox assembly (1) according to one or more of the previous claims, wherein it further comprises a coupling gear (3) which is mounted along the vehicle axle (100) concentrically to the rotation axis (X) and is adapted to be operatively connected to said motor (200).

10. The gearbox assembly (1) according to claim 9, wherein the coupling gear (3) is mechanically connected to the sun gear (14) via a coupling member (5).

11. A powertrain assembly for a vehicle axle (100) which extends along a rotation axis (X), the powertrain assembly comprising:
- a gearbox assembly (1) according to one or more of the previous claims; and
- a motor (200) operatively coupled to the gearbox assembly (1).

12. The powertrain assembly according to claim 11, wherein the motor (200) is an electric motor having a stator and a rotor, wherein the motor (200) is mounted with its rotor rotating about an axis (X4) substantially parallel to the rotation axis (X) of the vehicle axle (100).

13. The powertrain assembly according to any of claims 11 and 12, further comprising a gear set (220) configured for mechanically coupling an output shaft (210) of the motor (200) with the gearbox assembly (1).

14. The powertrain assembly according to claim 13, wherein the gearbox assembly is according to claim 9 or 10, and wherein the gear set (220) comprises a first gear (222) suitable to be mounted on the output shaft (210) of the motor (200) and a second gear (224) suitable to be positioned between and to engage with both said first gear (222) and said coupling gear (3) of the gearbox assembly (1).

15. The powertrain assembly according to claim 13, wherein the gearbox assembly is according to claim 9 or 10, and wherein the gear set (220) comprises only a first gear (222) suitable to be mounted on the output shaft (210) of the motor (200) and to engage with said coupling gear (3) of the gearbox assembly (1).

16. The powertrain assembly according to claim 11, wherein said motor (200) is an electric motor having a stator and a rotor, wherein the motor (200) is mounted along the vehicle axle (100) with its rotor rotating positioned concentrically to the rotation axis (X).

17. The powertrain assembly according to claim 16, wherein the rotor of said motor (200) is coupled directly with the sun gear (14).

18. A vehicle comprising at least the gearbox assembly (1) according to one or more of claims 1 to 10 or a powertrain assembly according to one or more of claims 11 to 17.

19. The vehicle according to claim 18, wherein the vehicle is a heavy-duty or medium-duty vehicle.

20. The vehicle according to claim 18 or 19, wherein the vehicle is a heavy-duty or medium-duty truck.

## Patentansprüche

1. Getriebeanordnung (1) für eine Fahrzeugachse (100), die sich entlang einer Drehachse (X) erstreckt, die Anordnung (1) mindestens umfassend:
- ein Planetengetriebesystem (10), das entlang der Fahrzeugachse (100) positioniert und geeignet ist, um Leistung von einem Motor (200) zu erhalten, der mit der Fahrzeugachse (100) assoziiert ist, das Planetengetriebesystem (10) umfassend ein Hohlrad (12), ein Sonnenrad (14), einen Planeten, umfassend ein oder mehrere Planetenräder (16) und einen Planetenträger (18), der ein Abtriebselement (20) umfasst;
- ein Differential (30), umfassend eine Differentialwelle (31), die entlang der Drehachse (100) mit einem ersten Ende angrenzend an den Planetenträger (18) angeordnet ist und ein Abtriebsrad (32) umfasst, das konzentrisch zu der Drehachse (X) entlang der Differentialwelle (31) angeordnet ist;
- ein Freilaufrad (40), das sich konzentrisch zu dem Abtriebselement (20) des Planetenträgers (18) befindet;
- eine Vielzahl von Vorgelegewellenanordnungen (50, 60, 70), jeweils umfassend:
- eine Vorgelegewelle (52, 62, 72), die drehbar um eine Achse (X1, X2, X3) parallel zu der Drehachse (X) positioniert ist;
- zwei Vorgelegewellenzahnräder (54, 64, 74; 56, 66, 76), die auf der entsprechenden Vorgelegewelle (52, 62, 72) in einem Abstand voneinander montiert und konfiguriert sind, um eines (54, 64, 74) mit dem Freilaufrad (40) und das andere (56, 66, 76) mit dem Abtriebszahnrad (32) einzugreifen;
- eine Kupplung (80), die konfiguriert ist, um zumindest zwischen einer ersten Position, in der sie das Abtriebselement (20) des Planetenträgers (18) mit dem Freilaufrad (40) koppelt, und einer zweiten Position, in der sie das Abtriebselement (20) des Planetenträgers (18) direkt mit dem Differential (30) koppelt, betätigt zu werden.

2. Getriebeanordnung (1) nach Anspruch 1, wobei die Vielzahl von Vorgelegewellenanordnungen Folgendes umfasst:
- eine erste Vorgelegewellenanordnung (50), umfassend eine erste Vorgelegewelle (52), die drehbar um eine erste Achse (X1) parallel zu der Drehachse (X) positioniert ist, ein erstes Vorgelegerad (54) und ein zweites Vorgelegerad (56), die auf der ersten Vorgelegewelle (52) in einem Abstand voneinander montiert und konfiguriert sind, um jeweils mit dem Freilaufrad (40) und dem Abtriebszahnrad (32) einzugreifen;
- eine zweite Vorgelegewellenanordnung (60), umfassend eine zweite Vorgelegewelle (62), die auf einer Seite der Fahrzeugachse (100) gegenüber der einen Seite angeordnet ist, auf der die erste Vorgelegewelle (52) angeordnet ist, und die um eine zweite Achse (X2) parallel zu der Drehachse (X) dreht, ein drittes Vorgelegerad (64) und ein viertes Vorgelegerad (66), die auf der zweiten Vorgelegewelle (62) in einem Abstand voneinander montiert und konfiguriert sind, um jeweils mit dem Freilaufrad (40) und dem Abtriebszahnrad (32) einzugreifen.

3. Getriebeanordnung (1) nach Anspruch 2, wobei die erste und die zweite Vorgelegewelle (52, 62) um die Drehachse (X) entlang eines virtuellen Umfangs positioniert sind, dessen Mittelpunkt die Drehachse (X) ist, mit ihren jeweiligen ersten und zweiten Drehachsen (X2, X3), die sich in Bezug auf die Drehachse (X) an sich diametral gegenüberliegend befinden.

4. Getriebeanordnung (1) nach Anspruch 1, wobei die Vielzahl von Vorgelegewellenanordnungen Folgendes umfasst:
- eine erste Vorgelegewellenanordnung (50), umfassend eine erste Vorgelegewelle (52), die drehbar um eine erste Achse (X1) parallel zu der Drehachse (X) positioniert ist, ein erstes Vorgelegerad (54) und ein zweites Vorgelegerad (56), die auf der ersten Vorgelegewelle (52) in einem Abstand voneinander montiert und konfiguriert sind, um jeweils mit dem Freilaufrad (40) und dem Abtriebszahnrad (32) einzugreifen;
- eine zweite Vorgelegewellenanordnung (60), umfassend eine zweite Vorgelegewelle (62), die drehbar um eine zweite Achse (X2) parallel zu der Drehachse (X) positioniert ist, ein drittes Vorgelegerad (64) und ein viertes Vorgelegerad (66), die auf der zweiten Vorgelegewelle (62) in einem Abstand voneinander montiert und konfiguriert sind, um jeweils mit dem Freilaufrad (40) und dem Abtriebszahnrad (32) einzugreifen;
- eine dritte Vorgelegewellenanordnung (70), umfassend eine dritte Vorgelegewelle (72), die drehbar um eine dritte Achse (X3) parallel zu der Drehachse (X) angeordnet ist, ein fünftes Vorgelegerad (74) und ein sechstes Vorgelegerad (76), die auf der dritten Vorgelegewelle (72) in einem Abstand voneinander montiert und konfiguriert sind, um jeweils mit dem Freilaufrad (40) und dem Abtriebszahnrad (32) einzugreifen.

5. Getriebeanordnung (1) nach Anspruch 4, wobei die erste, die zweite und die dritte Vorgelegewelle (52, 62, 72) um die Drehachse (X) positioniert sind, wobei ihre jeweiligen Drehachsen (X1, X2, X3) an den Spitzen eines im Wesentlichen gleichseitigen Dreiecks positioniert sind.

6. Getriebeanordnung (1) nach einem oder mehreren der vorherigen Ansprüche, wobei die Kupplung (80) zwischen dem Planetenträger (18) und dem Differential (30) positioniert und konfiguriert ist, um betätigt zu werden, um entlang der Drehachse (X) zwischen der ersten und der zweiten Position zu wechseln.

7. Getriebeanordnung (1) nach einem oder mehreren der vorherigen Ansprüchen, wobei die Kupplung (80) eine Klauenkupplung umfasst oder daraus besteht.

8. Getriebeanordnung (1) nach einem oder mehreren der vorherigen Ansprüche, wobei das Freilaufrad (40) einen oder mehrere Zähne aufweist, die konfiguriert sind, um in der ersten Position mit der Kupplung (80) einzugreifen und in der zweiten Position von der Kupplung (80) gelöst zu werden.

9. Getriebeanordnung (1) nach einem oder mehreren der vorherigen Ansprüche, ferner umfassend ein Kupplungsgetriebe (3), das entlang der Fahrzeugachse (100) konzentrisch zu der Drehachse (X) montiert ist, um funktionsfähig mit dem Motor (200) verbunden zu werden.

10. Getriebeanordnung (1) nach Anspruch 9, wobei das Kupplungsrad (3) über ein Kupplungselement (5) mechanisch mit dem Sonnenrad (14) verbunden ist.

11. Antriebsstranganordnung für eine Fahrzeugachse (100), die sich entlang einer Drehachse (X) erstreckt, die Antriebsstranganordnung umfassend:
- eine Getriebeanordnung (1) nach einem oder mehreren der vorherigen Ansprüche; und
- einen Motor (200), der funktionsfähig mit der Getriebeanordnung (1) gekoppelt ist.

12. Antriebsstranganordnung nach Anspruch 11, wobei der Motor (200) ein Elektromotor ist, der einen Stator und einen Rotor aufweist, wobei der Motor (200) mit seinem Rotor drehend um eine Achse (X4) montiert ist, die im Wesentlichen parallel zu der Drehachse (X) der Fahrzeugachse (100) ist.

13. Antriebsstranganordnung nach einem der Ansprüche 11 und 12, ferner umfassend einen Getriebesatz (220), der konfiguriert ist, um eine Abtriebswelle (210) des Motors (200) mechanisch mit der Getriebeanordnung (1) zu koppeln.

14. Antriebsstranganordnung nach Anspruch 13, wobei die Getriebeanordnung nach Anspruch 9 oder 10 ist und wobei der Zahnradsatz (220) ein erstes Zahnrad (222), das geeignet ist, um auf der Abtriebswelle (210) des Motors (200) montiert zu werden, und ein zweites Zahnrad (224), das geeignet ist, um zwischen dem ersten Zahnrad (222) und dem Kupplungszahnrad (3) der Getriebeanordnung (1) positioniert zu werden und damit einzugreifen, umfasst.

15. Antriebsstranganordnung nach Anspruch 13, wobei die Getriebeanordnung nach Anspruch 9 oder 10 ist und wobei der Zahnradsatz (220) nur ein erstes Zahnrad (222) umfasst, das geeignet ist, um auf der Abtriebswelle (210) des Motors (200) montiert zu werden und mit dem Kupplungszahnrad (3) der Getriebeanordnung (1) einzugreifen.

16. Antriebsstranganordnung nach Anspruch 11, wobei der Motor (200) ein Elektromotor ist, der einen Stator und einen Rotor aufweist, wobei der Motor (200) entlang der Fahrzeugachse (100) mit seinem Rotor konzentrisch drehend zu der Drehachse (X) montiert ist.

17. Antriebsstranganordnung nach Anspruch 16, wobei der Rotor des Motors (200) direkt mit dem Sonnenrad (14) gekoppelt ist.

18. Fahrzeug, umfassend mindestens die Getriebeanordnung (1) nach einem oder mehreren der Ansprüche 1 bis 10 oder eine Antriebsstranganordnung nach einem oder mehreren der Ansprüche 11 bis 17.

19. Fahrzeug nach Anspruch 18, wobei das Fahrzeug ein Lastkraftwagen für schwere oder mittelschwere Lasten ist.

20. Fahrzeug nach Anspruch 18 oder 19, wobei das Fahrzeug ein Lastkraftwagen für schwere oder mittelschwere Lasten ist.

## Revendications

1. Ensemble boîte de vitesses (1) pour un essieu de véhicule (100) qui s'étend le long d'un axe de rotation (X), l'ensemble (1) comprenant au moins :
- un système d'engrenage planétaire (10) qui est positionné le long de l'essieu de véhicule (100) et est apte à recevoir la puissance d'un moteur (200) associé à l'essieu de véhicule (100), le système d'engrenage planétaire (10) comprenant une couronne (12), un engrenage solaire (14), un satellite comprenant un ou plusieurs satellites (16), et un porte-satellites (18) qui comprend un élément de sortie (20) ;
- un différentiel (30) comprenant un arbre différentiel (31) qui est positionné le long de l'axe de rotation (100) avec une première extrémité adjacente au porte-satellites (18) et comporte un engrenage de sortie (32) positionné concentriquement à l'axe de rotation (X) le long de l'arbre différentiel (31) ;
- un engrenage à roue libre (40) situé concentriquement à l'élément de sortie (20) du porte-satellites (18) ;
- une pluralité d'ensembles arbre de renvoi (50, 60, 70) comprenant chacun :
- un arbre de renvoi (52, 62, 72) positionné en rotation autour d'un axe (X1, X2, X3) parallèle à l'axe de rotation (X) ;
- deux pignons entraînés (54, 64, 74 ; 56, 66, 76) qui sont montés sur l'arbre de renvoi (52, 62, 72) correspondant à distance l'un de l'autre et sont configurés pour venir en prise l'un (54, 64, 74) avec l'engrenage à roue libre (40) et l'autre (56, 66, 76) avec l'engrenage de sortie (32), respectivement ;
- un embrayage (80) qui est configuré pour être actionné au moins entre une première position où il couple l'élément de sortie (20) du porte-satellites (18) à l'engrenage à roue libre (40) et une seconde position où il couple l'élément de sortie (20) du porte-satellites (18) directement avec le différentiel (30).

2. Ensemble boîte de vitesses (1) selon la revendication 1, dans lequel la pluralité d'ensembles arbre de renvoi comprend :
- un premier ensemble arbre de renvoi (50) comprenant un premier arbre de renvoi (52) qui est positionné en rotation autour d'un premier axe (X1) parallèle à l'axe de rotation (X), un premier pignon entraîné (54) et un deuxième pignon entraîné (56) qui sont montés espacés l'un de l'autre sur le premier arbre de renvoi (52) et sont configurés pour venir en prise respectivement avec l'engrenage à roue libre (40) et l'engrenage de sortie (32) ;
- un deuxième ensemble d'arbres de renvoi (60) comprenant un deuxième arbre de renvoi (62) positionné sur un côté de l'axe du véhicule (100) opposé à celui où se trouve le premier arbre de renvoi (52), tournant autour d'un deuxième axe (X2) parallèle à l'axe de rotation (X), un troisième pignon entraîné (64) et un quatrième pignon entraîné (66) montés sur ce deuxième arbre de renvoi (62), espacés l'un de l'autre et configurés pour s'engager respectivement avec le pignon de roue libre (40) et le pignon de sortie (32).

3. Ensemble boîte de vitesses (1) selon la revendication 2, dans lequel lesdits premier et deuxième arbres de renvoi (52, 62) sont positionnés autour de l'axe de rotation (X) le long d'une circonférence virtuelle ayant pour centre l'axe de rotation (X), avec leurs premier et deuxième axes de rotation (X2, X3) respectifs qui sont situés diamétralement opposés l'un à l'autre par rapport à l'axe de rotation (X) lui-même.

4. Ensemble boîte de vitesses (1) selon la revendication 1, dans lequel la pluralité d'ensembles arbre de renvoi comprend :
- un premier ensemble arbre de renvoi (50) comprenant un premier arbre de renvoi (52) qui est positionné en rotation autour d'un premier axe (X1) parallèle à l'axe de rotation (X), un premier pignon entraîné (54) et un deuxième pignon entraîné (56) qui sont montés espacés l'un de l'autre sur le premier arbre de renvoi (52) et sont configurés pour venir en prise respectivement avec l'engrenage à roue libre (40) et l'engrenage de sortie (32) ;
- un deuxième ensemble arbre de renvoi (60) comprenant un deuxième arbre de renvoi (62) qui est positionné en rotation autour d'un deuxième axe (X2) parallèle à l'axe de rotation (X), un troisième pignon entraîné (64) et un quatrième pignon entraîné (66) qui sont montés espacés l'un de l'autre sur le deuxième arbre de renvoi (62) et sont configurés pour venir en prise respectivement avec l'engrenage à roue libre (40) et l'engrenage de sortie (32) ;
- un troisième ensemble arbre de renvoi (70) comprenant un troisième arbre de renvoi (72) qui est positionné en rotation autour d'un troisième axe (X3) parallèle à l'axe de rotation (X), un cinquième pignon entraîné (74) et un sixième pignon entraîné (76) qui sont montés espacés l'un de l'autre sur le troisième arbre de renvoi (72) et sont configurés pour venir en prise respectivement avec l'engrenage à roue libre (40) et l'engrenage de sortie (32).

5. Ensemble boîte de vitesses (1) selon la revendication 4, dans lequel lesdits premier, deuxième et troisième arbres de renvoi (52, 62, 72) sont positionnés autour de l'axe de rotation (X) avec leurs axes de rotation (X1, X2, X3) respectifs positionnés aux sommets d'un triangle sensiblement équilatéral.

6. Ensemble boîte de vitesses (1) selon une ou plusieurs des revendications précédentes, dans lequel l'embrayage (80) est positionné entre le porte-satellites (18) et le différentiel (30) et est configuré pour être actionné afin de passer, le long de l'axe de rotation (X), entre lesdites première et seconde positions.

7. Ensemble boîte de vitesses (1) selon une ou plusieurs des revendications précédentes, dans lequel l'embrayage (80) comprend ou est constitué par un embrayage à crabots.

8. Ensemble boîte de vitesses (1) selon une ou plusieurs des revendications précédentes, dans lequel l'engrenage à roue libre (40) comprend une ou plusieurs dents configurées pour venir en prise avec l'embrayage (80) dans ladite première position et pour être débrayées de l'embrayage (80) dans ladite seconde position.

9. Ensemble boîte de vitesses (1) selon une ou plusieurs des revendications précédentes, dans lequel il comprend en outre un engrenage d'accouplement (3) qui est monté le long de l'essieu du véhicule (100) concentriquement à l'axe de rotation (X) et est adapté pour être connecté de manière opérationnelle audit moteur (200).

10. Ensemble boîte de vitesses (1) selon la revendication 9, dans lequel l'engrenage d'accouplement (3) est relié mécaniquement à l'engrenage solaire (14) par l'intermédiaire d'un élément de liaison (5).

11. Ensemble de transmission pour un essieu de véhicule (100) qui s'étend le long d'un axe de rotation (X), l'ensemble de transmission comprenant :
- un ensemble boîte de vitesses (1) selon une ou plusieurs des revendications précédentes ; et
- un moteur (200) couplé de manière opérationnelle à l'ensemble boîte de vitesses (1).

12. Ensemble de transmission selon la revendication 11, dans lequel le moteur (200) est un moteur électrique ayant un stator et un rotor, dans lequel le moteur (200) est monté avec son rotor tournant autour d'un axe (X4) sensiblement parallèle à l'axe de rotation (X) de l'essieu de véhicule (100).

13. Ensemble de transmission selon l'une quelconque des revendications 11 et 12, comprenant en outre un train d'engrenages (220) configuré pour coupler mécaniquement un arbre de sortie (210) du moteur (200) à l'ensemble boîte de vitesses (1).

14. Ensemble de transmission selon la revendication 13, dans lequel l'ensemble boîte de vitesses est selon la revendication 9 ou 10, et dans lequel le train d'engrenages (220) comprend un premier engrenage (222) apte à être monté sur l'arbre de sortie (210) du moteur (200) et un second engrenage (224) apte à être positionné entre et à s'engrener avec à la fois ledit premier engrenage (222) et ledit engrenage d'accouplement (3) de l'ensemble boîte de vitesses (1).

15. Ensemble de transmission selon la revendication 13, dans lequel l'ensemble boîte de vitesses est selon la revendication 9 ou 10, et dans lequel le train d'engrenages (220) comprend uniquement un premier engrenage (222) apte à être monté sur l'arbre de sortie (210) du moteur (200) et à s'engrener avec ledit engrenage d'accouplement (3) de l'ensemble boîte de vitesses (1).

16. Ensemble de transmission selon la revendication 11, dans lequel ledit moteur (200) est un moteur électrique ayant un stator et un rotor, dans lequel le moteur (200) est monté le long de l'essieu de véhicule (100), avec son rotor en rotation positionné concentriquement par rapport à l'axe de rotation (X).

17. Ensemble de transmission selon la revendication 16, dans lequel le rotor dudit moteur (200) est couplé directement à l'engrenage solaire (14).

18. Véhicule comprenant au moins l'ensemble boîte de vitesses (1) selon une ou plusieurs des revendications 1 à 10 ou un ensemble de transmission selon une ou plusieurs des revendications 11 à 17.

19. Véhicule selon la revendication 18, dans lequel le véhicule est un véhicule utilitaire lourd ou un véhicule utilitaire moyen.

20. Véhicule selon la revendication 18 ou 19, dans lequel le véhicule est un camion lourd ou moyen.
